# FASCICULE DE BREVET EUROPEEN

(11) **EP 1 625 381 B1**
(45) Date de publication et mention de la délivrance du brevet: **08.12.2010**
(21) Numéro de dépôt: 04742866.9
(22) Date de dépôt: 13.05.2004
(51) Int. Cl.: G01N 1/20

(54) **DISPOSITIF DE PRELEVEMENT DE POUDRES**
EINRICHTUNG ZUM EXTRAHIEREN VON PULVER
DEVICE FOR EXTRACTING POWDER

(30) Priorité: 16.05.2003 FR 0305878
(43) Date de publication de la demande: 15.02.2006
(73) Titulaire: AREVA NC, 75009 Paris (FR)
(72) Inventeur: ORANGE, Christian, F-50260 BRICQUEBEC (FR); TREVISAN, Christian, F-93190 LIVRY GARGAN (FR); TOURRE-LEDOUX, Joël, F-30131 PUJAUT (FR)
(74) Mandataire: Poulin, Gérard
(86) Numéro de dépôt international: PCT/FR2004/050192
(87) Numéro de publication internationale: WO 2004/104556

(56) Documents cités:
- DE-U- 29 502 487
- DE-U- 29 720 233
- US-A- 3 750 478
- US-A- 4 024 765
- US-A- 4 026 154

## Description

L'invention a trait à un dispositif de prélèvement de poudres.

Il peut trouver emploi notamment pour prélever par intermittences des échantillons de poudres soumises à un écoulement plus ou moins continu dans un processus industriel, afin de contrôler leur composition ou leur qualité, et il offre un intérêt particulier notamment si les volumes doivent être invariables, petits ou si les poudres sont dangereuses.

Des dispositifs traditionnels de prélèvement comprennent des vannes, des robinets ou des dispositifs analogues, mais ils sont mal adaptés aux poudres, qui peuvent facilement s'introduire entre les parties mobiles et les gripper et qu'une étanchéité suffisante pour se prémunir contre les fuites de matières dangereuses est difficile à garantir. De plus, il est difficile de régler le volume qui sera prélevé avec de tels moyens.

Un autre problème important à résoudre pour obtenir un prélèvement satisfaisant consiste à éviter une stagnation de poudre provenant d'un moment antérieur de l'écoulement autour de l'organe de prélèvement, qui se mêlerait à la poudre effectivement prélevée et compromettrait la véracité de la mesure.

Un autre problème pouvant présenter de l'importance consiste à éviter que le dispositif de prélèvement ne perturbe l'écoulement, ce qui pourrait d'ailleurs conduire au problème mentionné ci-dessus de création d'une poche de poudre stagnant devant le dispositif.

Le dispositif de prélèvement de poudre du document US 4 024 765 comprend : une annexe, généralement vide des poudres, d'un conduit d'écoulement des poudres ; un tiroir traversant une paroi de l'annexe, et coulissant entre une première position où une gorge qu'il comporte s'étend dans l'annexe et une seconde position où la gorge s'étend hors de l'annexe, la gorge étant limitée par des faces de glissement ou de chute des poudres ; et un volet mobile dans la conduite d'écoulement entre une position retirée où il n'a pas d'effet essentiel sur l'écoulement des poudres et une position éployée où il dirige l'écoulement des poudres dans l'annexe.

Il apparaît que l'écoulement des poudres passe à côté du dispositif de prélèvement dans les conditions normales et n'est pas susceptible d'être perturbé par lui ni de le souiller par des stagnations de poudre. Dans la position de prélèvement, la poudre ou une portion de celle-ci est au contraire dirigée temporairement vers l'annexe contenant le dispositif de prélèvement et emplit la gorge du tiroir, qui peut alors être déplacée dans la deuxième position, où le volume de poudre contenu dans la gorge est prélevé et analysé. Dans ce brevet, le tiroir est enfoncé dans l'annexe quand la poudre l'emplit. Un échantillon de poudre pénètre dans la gorge, puis le tiroir est retiré et retourné. Le contenu de la gorge s'en échappe alors complètement. On peut reprocher à cette conception que le tiroir est déplacé suivant une translation et une rotation, ce qui est compliqué, accroît les possibilités de frottement et de grippage, et qu'un volume de poudre assez grand doit emplir l'annexe pour qu'un échantillon soit prélevé.

Un prélèvement représentatif de l'écoulement à un instant bien déterminé peut devenir impossible.

L'invention peut être tenue pour un perfectionnement de cette conception : elle est originale en ce que le tiroir a une orientation dressée (verticale ou sensiblement) et que la gorge est limitée par une face de plafond et une face inclinée qui prolonge une paroi de fond de l'annexe lorsque le tiroir est dans la première position.

Dans une réalisation préférée, l'annexe est un encorbellement du conduit et sa paroi de fond est inclinée vers le conduit ; la seconde position est située au-dessous de la première position ; et le volet est tournant, la position retirée étant sensiblement verticale et la position éployée étant inclinée à travers le conduit, le volet touchant la paroi de fond juste au-dessous de la gorge dans la première position du tiroir.

On garantit que le volume de poudre dirigé vers l'annexe mais sans faire partie de l'échantillon prélevé rejoint l'écoulement principal en glissant sur la paroi de fond inclinée ; la continuité de cette paroi inclinée et de la face inclinée de la gorge garantit un emplissage de celle-ci grâce à la régularité de l'écoulement ; et la proximité de la gorge et de l'extrémité du volet dans la position éployée garantit le remplissage de la gorge même à faible débit de poudre. De plus, un mouvement simple de translation suffit à imposer l'écoulement de la poudre hors de la gorge dans la position retirée ; et si l'intention d'échantillonner cesse, il suffit de replier le volet pour que le contenu de la gorge revienne à l'écoulement principal.

Des conditions de fonctionnement et de prélèvement encore plus satisfaisantes sont réalisées si le volet est une goulotte comprenant une paroi incurvée et s'étendant dans un second encorbellement de la conduite, car le volet ne perturbe nullement l'écoulement en position retirée, mais il assure un rassemblement de la poudre vers la gorge dans la position éployée.

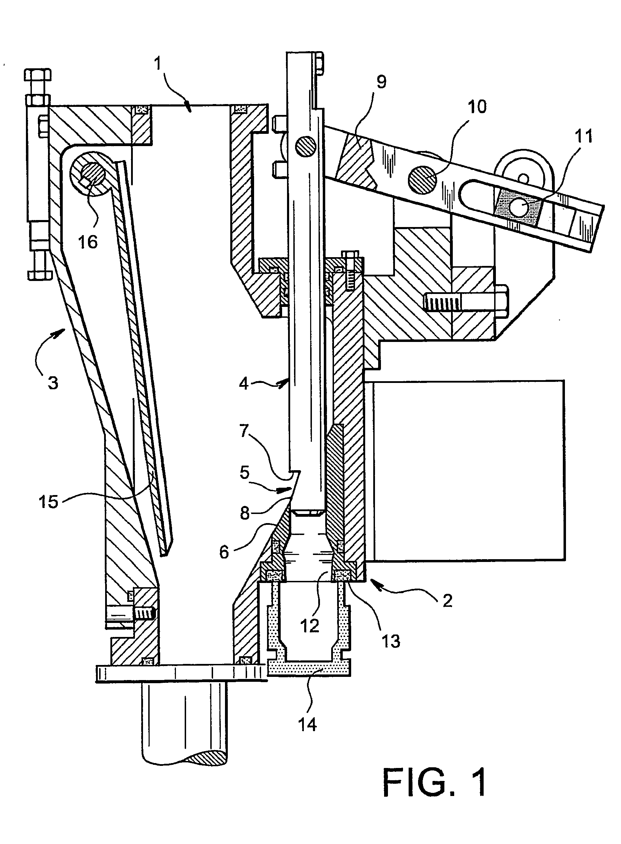

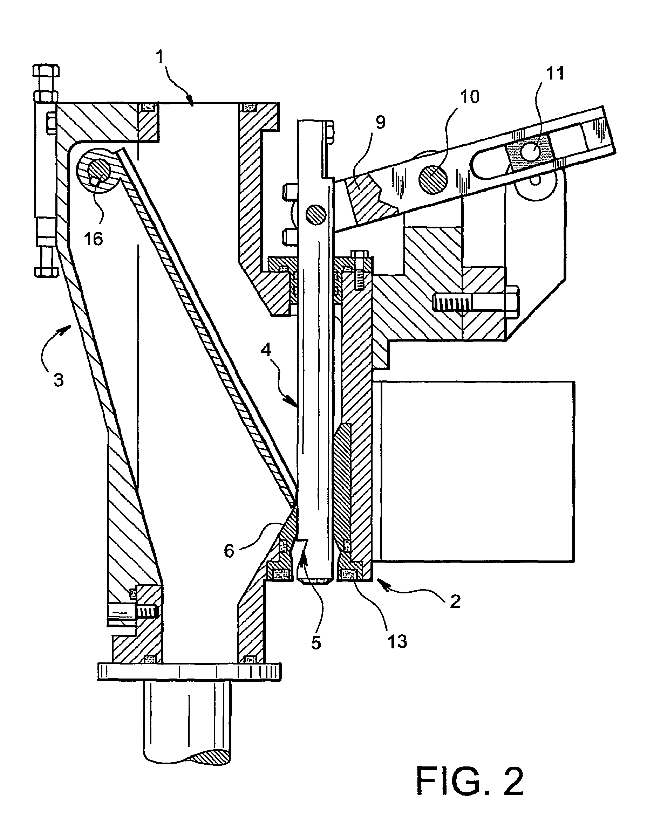

L'invention sera maintenant décrite au moyen des figures 1 et 2 qui représentent les deux états principaux du dispositif.

A la figure 1, l'écoulement de poudre est libre. Il s'effectue en chute par un conduit 1 vertical, dont la section de prélèvement comprend cependant une annexe composée de deux encorbellements 2 et 3 opposés sur sa périphérie. Le premier contient un tiroir 4 qui le traverse de part en part et comprend une tige verticale munie d'une gorge 5. La gorge 5 s'étend juste au-dessus d'une face interne de fond 6 de l'encorbellement 2 qui est inclinée vers le conduit 1, et elle est limitée par une surface de plafond 7 et surtout une face inclinée 8 qui, dans la position représentée, prolonge la face de fond 6. Le tiroir 4 est articulé à un levier 9 au-dessus de l'encorbellement 2, et le levier 9 bascule autour d'un pivot 10 en étant entraîné du coté opposé par un axe excentrique 11 déplacé par un moteur non représenté. Au-dessous de l'encorbellement 2 s'étend une embouchure 12 que peut occuper partiellement le tiroir 4 et qui est entourée par un joint plat 13 sous lequel peut être posé un flacon 14 de recueil d'échantillons.

L'encorbellement 3 comprend un volet 15 en forme de goulotte, présentant donc des sections incurvées et déprimées au centre qui s'étend sensiblement verticalement dans la configuration de la figure 1, où il est retiré : il ne perturbe donc pas essentiellement l'écoulement de la poudre à travers la conduite 1. Il est suspendu à un axe de rotation 16 supérieur mû par un autre moteur qui n'est pas non plus représenté.

On commence à se reporter à la figure 2 pour découvrir comment s'effectue un prélèvement de poudre. Le volet 15 est d'abord éployé par rotation de l'axe 16 à un état où il s'étend à travers la conduite 1 et touche par son extrémité la face de fond 6 de l'encorbellement 2, juste au-dessous de la gorge 5 se trouvant dans la position supérieure de la figure 1. Au moins une portion de l'écoulement de poudre est dirigée vers l'annexe du conduit 1 constituée par l'intérieur de l'encorbellement 2, et notamment dans le volume de la gorge 5 qui s'emplit complètement. Il faut remarquer que si le volet 15 a des parois incurvées, il peut faire converger la poudre qu'il intercepte en un écoulement plus étroit qui comble donc plus aisément la gorge 5, surtout si sa section devient de plus en plus étroite vers le bas, ce qui rend le dispositif intéressant même à de faibles écoulements de poudre, puisqu'on peut même envisager que presque tout le débit de poudre soit temporairement dirigé vers la gorge 5. Quand celle-ci est emplie, un basculement du levier 9 abaisse le tiroir 4 et place la gorge 5 dans l'embouchure 12, et son contenu s'écoule dans le flacon 14 ou autrement. L'inclinaison de la face inférieure 8 est suffisante pour que la poudre s'en écoule sans qu'aucune rétention n'existe, et la poudre s'écoule de même complètement de la face de fond 6 de l'encorbellement 2 dès que le volet 15 est retiré et revient à sa position de départ ; comme cette position est sensiblement verticale, aucune rémanence de poudre n'existe non plus sur le volet 15. L'échantillon prélevé suivant sera donc parfaitement représentatif de la poudre s'écoulant alors. De même, la poudre qui a pu s'accumuler sous la face de plafond 7 s'en détache complètement quand l'échantillon s'écoule de la gorge 5 : la face de plafond 7 est donc appelée une face de chute de la poudre, et la face inférieure 8 est appelée une face de glissement de la poudre (comme la face de fond 6).

## Revendications

1. Dispositif de prélèvement de poudres, comprenant : une annexe, généralement vide des poudres, d'un conduit (1) d'écoulement des poudres ; un tiroir (4) traversant une paroi de l'annexe, coulissant entre une première position où une gorge (5) qu'il comporte s'étend dans l'annexe et une seconde position où la gorge s'étend hors de l'annexe, la gorge étant limitée par des faces de glissement ou de chute (7, 8) des poudres ; et un volet (15) mobile dans la conduite d'écoulement entre une position retirée où il n'a pas d'effet essentiel sur l'écoulement des poudres et une position éployée où il dirige l'écoulement des poudres dans l'annexe, **caractérisé en ce que** le tiroir (4) a une orientation dressée et la gorge est limitée par une face de plafond (7) et une face inclinée (8) qui prolonge la paroi de fond de l'annexe lorsque le tiroir est dans la première position.

2. Dispositif de prélèvement de poudres suivant la revendication 1, **caractérisé en ce que** : l'annexe est un encorbellement(2) du conduit (1) et sa paroi de fond (6) est inclinée vers le conduit ; la seconde position est située au-dessous de la première position ; et le volet est tournant, la position retirée étant sensiblement verticale et la position éployée étant inclinée à travers le conduit, le volet touchant la paroi de fond juste au-dessous de la gorge (5) dans la première position du tiroir (4).

3. Dispositif de prélèvement de poudres suivant la revendication 2, **caractérisé en ce que** le volet est une goulotte comprenant une paroi incurvée et s'étendant dans un second encorbellement du conduit.

## Claims

1. Powder sampling device comprising: an appended part, generally empty of powders, of a powder flow channel (1); a drawer (4) traversing a wall of the appended part, and sliding between a first position where a groove (5) in it extends into the appended part and a second position where the groove extends beyond the appended part, the groove being limited by faces (7, 8) where the powder slides or falls; and a flap (15) in the flow channel, moving between a withdrawn position where it has no essential effect on the flow of the powders and an extended position where it directs the flow of the powders into the appended part, **characterised in that** the drawer (4) has an upright orientation and that the groove is limited by a ceiling face (7) and an sloped face (8) which extends a base plate of the appended part when the drawer is in the first position.

2. Powder sampling device of claim 1, **characterised in that**: the appended part is a corbelled section (2) of the channel (1) and its base plate (6) is sloped towards the channel; the second position is situated below the first position; and the flap rotates, the withdrawn position being more or less vertical and the extended position being sloped through the channel, the flap touching the base plate just below the groove (5) in the first position of the drawer (4).

3. Powder sampling device of claim 2, **characterised in that** the flap is a spout presenting an incurved section extending into a second corbelled section of the channel.

## Patentansprüche

1. Vorrichtung zum Entnehmen von Pulvern, Folgendes aufweisend: einen Allgemeinen leeren Anbau des Pulvers, eine Abfließleitung (1) des Pulver; einen Schieber (4), der eine Wand des Anbaus durchquert, der zwischen einer ersten Stellung, in der sich eine Hohlkehle (5), die er aufweist, in den Anbau erstreckt, und einer zweiten Position, in der sich die Hohlkehle aus dem Anbau heraus erstreckt, gleitet, wobei die Hohlkehle durch Gleit- oder Rutschflächen (7, 8) des Pulvers abgegrenzt ist; und eine Klappe (15), die in der Fließleitung zwischen einer zurückgezogenen Position, in der sie keine wesentliche Auswirkung auf das Fließen des Pulvers ausübt, und einer ausgefahrenen Position, in der sie das Fließen des Pulvers in den Anbau lenkt, beweglich ist, **dadurch gekennzeichnet, dass** der Schieber (4) eine aufgerichtete Ausrichtung hat und die Hohlkehle von einer Seite der Decke (7) und einer schrägen Seite (8), die die Bodenwand des Anbaus verlängert, wenn der Schieber in der ersten Position ist, abgegrenzt ist.

2. Entnahmevorrichtung von Pulver nach Anspruch 1, **dadurch gekennzeichnet, dass**: der Anbau eine Auskragung (2) der Leitung (1) ist und seine Bodenwand (6) zu der Leitung geneigt ist; die zweite Position unterhalb der ersten Position liegt und die Klappe drehend ist, wobei die zurückgezogene Position im Wesentlichen senkrecht und die ausgefahrene Position durch die Leitung hindurch geneigt ist, wobei die Klappe die Bodenwand unmittelbar unterhalb der Hohlkehle (5) in der ersten Position des Schiebers (4) berührt.

3. Entnahmevorrichtung von Pulver nach Anspruch 2, **dadurch gekennzeichnet, dass** die Klappe eine Rutsche ist, die eine gebogene Wand aufweist und sich in einer zweiten Auskragung der Leitung erstreckt.
